Europäisches Patentamt

European Patent Office

Office européen des brevets

(11) Publication number: **0 483 569 A1**

## EUROPEAN PATENT APPLICATION

(21) Application number: **91117370.6**

(22) Date of filing: **11.10.91**

(51) Int. Cl.5: **B29C 65/16**

(30) Priority: **29.10.90 US 605729**

(43) Date of publication of application:
**06.05.92 Bulletin 92/19**

(84) Designated Contracting States:
**AT BE CH DE DK ES FR GB GR IT LI LU NL SE**

(71) Applicant: **FMC CORPORATION**
**200 East Randolph Drive**
**Chicago Illinois 60601(US)**

(72) Inventor: **Fishman, Udi**
**3419 Ruby Court**
**San Jose, California 95148(US)**

(74) Representative: **Altenburg, Udo, Dipl.-Phys. et**
**al**
**Patent- und Rechtsanwälte**
**Bardehle-Pagenberg-Dost-Altenburg**
**Frohwitter-Geissler & Partner Postfach 86 06**
**20**
**W-8000 München 80(DE)**

(54) **Plastic welding apparatus.**

(57) A plastic welding apparatus (10) for sealing a first plastic material to a second plastic material. The apparatus (10) uses a laser beam to weld a plastic cover material to a wide variety of shapes and sizes of containers (16). An optical scanner (17) detects the location of a zone of overlapping material and provides signals to a computer (18) which directs a laser beam through a laser semi-transparent material to a laser-opaque material in the sealing zone. The opaque material converts the laser beam into heat and melts the material to fuse the two materials together. A conveyor (12) or other means, such as a robot can be used to move the containers (16) into position for the welding operation.

FIG_1

## BACKGROUND OF THE INVENTION

The present invention relates to a plastic welding apparatus, and more particularly, to a laser apparatus for welding a first pre-cut or roll stock plastic to a second plastic and for trimming the plastics to a desired shape.

Plastic containers are commonly used for the packaging of food and for a wide variety of other items wherein a pouch is formed by folding a flat piece of plastic membrane into a general form of a bag, and one edge portion of the membrane is sealed to another edge portion by the use of heat. In another application, a semi-rigid plastic container is filled with a product and a plastic lid is bonded to the container by the application of heat. The required heat can be provided by an electric hot plate which partially melts portions of the lid and container so the lid fuses to the container. When the hot plate is mounted adjacent to the lid heat, must be transferred by convection and conduction through the lid to the junction between the lid and the container in order to melt portions of the container which fuses to the lid. As a result the operation is relatively slow.

Another method of bonding involves the use of laminated plastic lids which have a layer of metal foil. An oscillating magnetic field induces an electrical current into the metal foil to develop heat which melts portions of the lid and container and fuses the lid to a lip of the container. An induction coil having an electrical current directs the oscillating magnetic field to an area adjacent to the junction of the lid and container lip. The oscillating magnetic field is not readily adaptable for sealing a plastic lid to containers with partitions, such as TV dinner trays.

## SUMMARY OF THE INVENTION

The present invention discloses a plastic welding apparatus which uses a single laser beam to weld a first piece of plastic to a second piece of plastic. When preformed plastic containers are used the welding apparatus seals plastic lids or other cover material to a plurality of different shapes of containers and trims off any excess material from the lid. The laser beam can also be used to imprint labels or other information on the surface of the lid or container and to provide holes or perforations in untrimmed portions of the lids. The lids are made of a layer of material which is transparent to a laser beam and a layer of material which is laser-opaque. A laser beam passes through the transparent material with little energy loss and is absorbed by the laser-opaque material where the beam is converted to heat. The heat from this opaque material melts the adjacent bonding layers so these layers fuse with a bonding layer of the container. The laser-opaque material can also be incorporated in the bonding layers. Energy is applied to a very localized area to provide rapid sealing and to minimize damage to other layers of either the lid or the container or to food inside the container.

A moving means can be used to transport containers past a scanner which collect information about the size, shape, orientation and location of each of the containers on the moving means and feeds this information to a computer. A sensor on the moving means feeds information about the velocity of container travel to the computer. The computer uses the size, shape, location, orientation and velocity information to direct the laser beam to seal lids to containers, and to trim and label lids and containers when needed. The laser beam can be precisely focused to apply heat only to desired areas of the lids and containers. The laser beam can be readily directed to seal the lids to partitions in containers, and to seal lids to odd shaped containers with relative ease of change over. The computer can use the size and shape information for automatically adjusting the laser beam path for sealing lids to containers or a manual set up can be used.

## BRIEF DESCRIPTION OF THE DRAWINGS

Figure 1 is an isometric of a plastic welding apparatus of the present invention showing a means for moving containers through the sealing system.

Figure 2 is a schematic of the laser beam and beam control system.

Figure 3 is an isometric of another embodiment of the laser beam and means of directing the beam.

Figure 4 is another embodiment of the apparatus of Figure 1.

Figure 5 is a cross section of a thin foil lid and a container having a plurality of compartments.

Figure 6 is a cross section of a simple container having an attached thick form lid.

Figure 7 is an enlarged cross section of a portion of Figure 6.

Figure 8 is a front view of the plastic welding apparatus of Figure 1 showing details of the physical layout of the apparatus.

Figure 9 illustrates an embodiment of the present invention for sealing a plastic lid to a plastic container.

Figure 10 is an enlargement of a portion of Figure 9.

Figure 11 is a top view of a 6-pack of plastic containers having a common lid.

Figure 12 is a side elevation of the containers shown in Figure 11.

Figure 13 is a plan view of a conveyor portion of the plastic welding apparatus of Figure 1.

Figure 14 is a side elevation of the conveyor shown in Figure 13.

Figure 15 is an enlarged view of a portion of the conveyor of Figure 13.

Figure 16 is a side view, partly in section, of the conveyor of Figure 15.

Figures 17 - 20 show a sequence of operation of the plastic welding apparatus sealing a cover material to a container.

Figure 21 shows how a robot can be used to move plastic containers into position for a welding operation.

Figure 22 is an isometric of still another embodiment of the laser beam and means of directing the beam.

Figure 23 is a cross sectional view of a pair of pieces of plastic material being welded together.

## DESCRIPTION OF THE PREFERRED EMBODIMENT

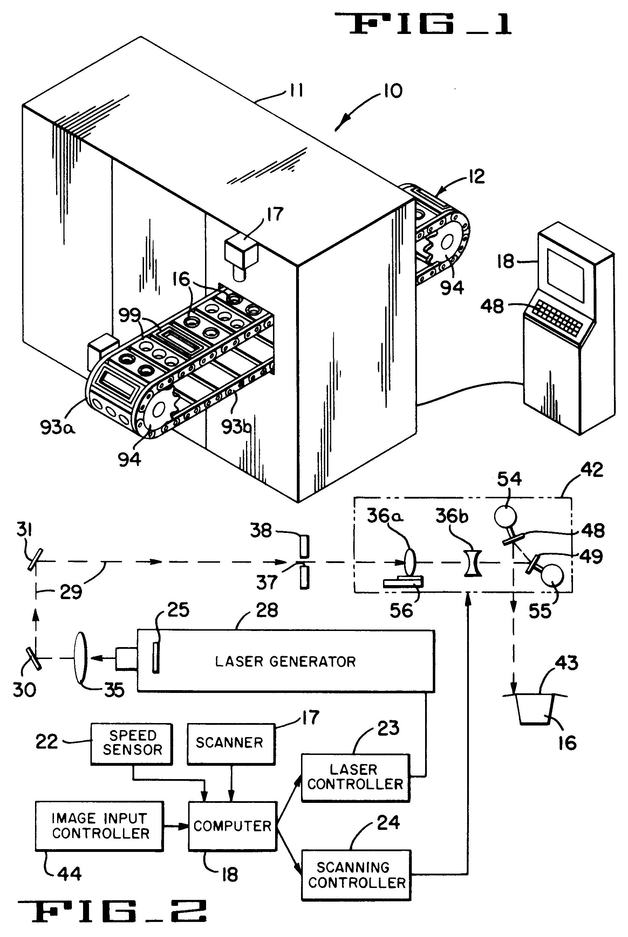

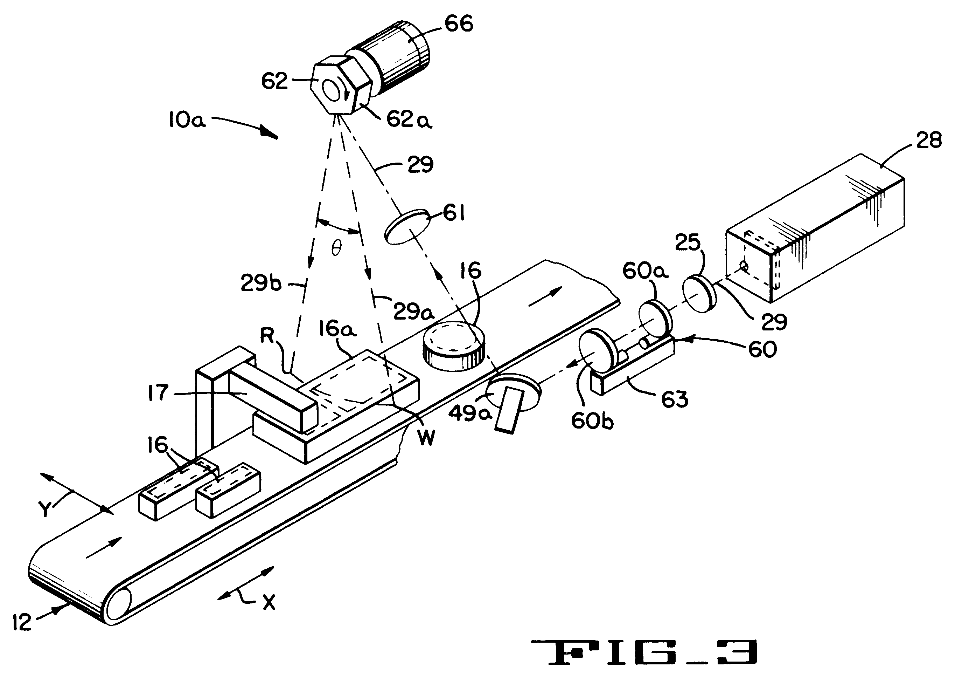

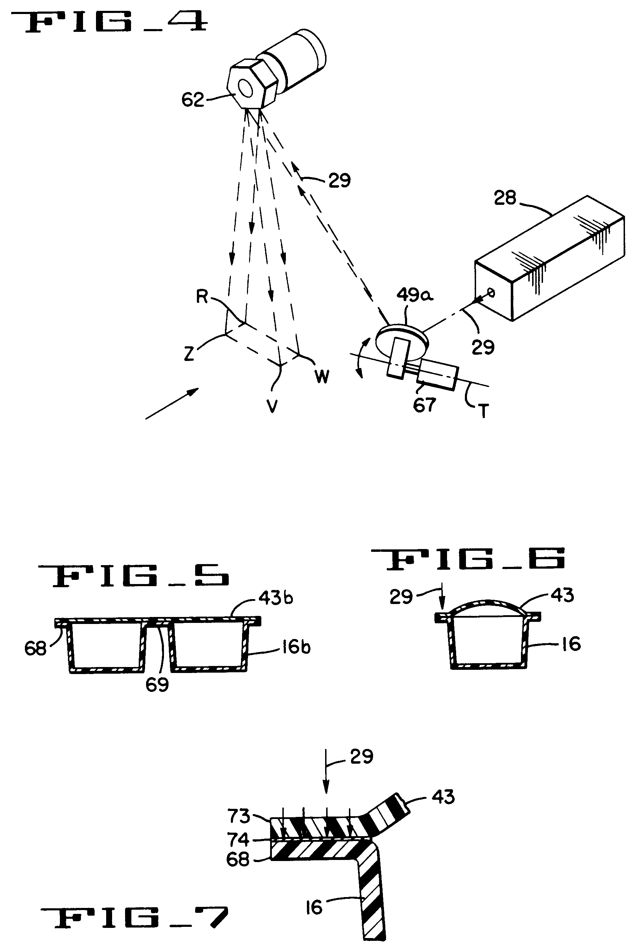

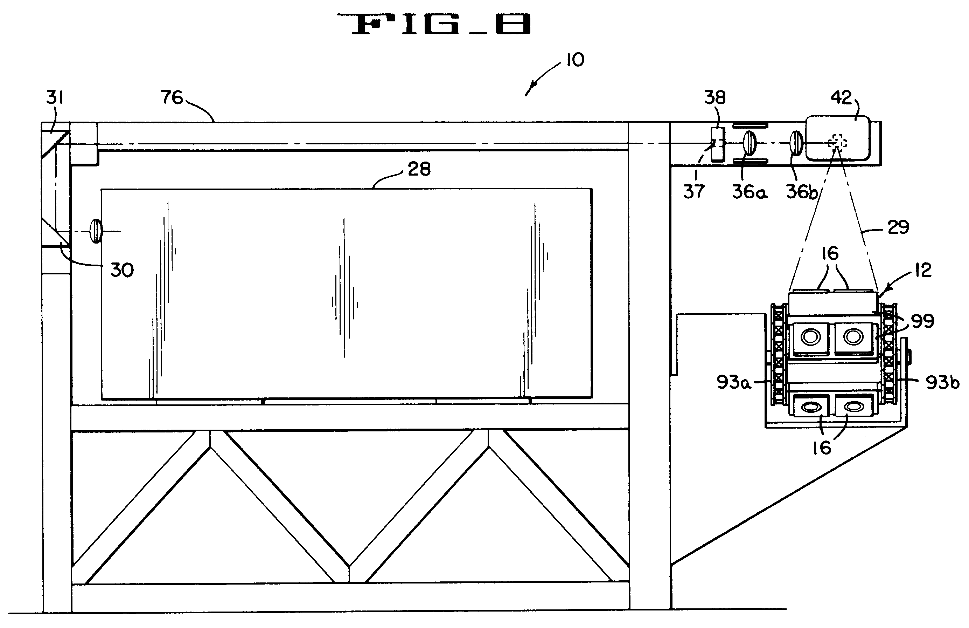

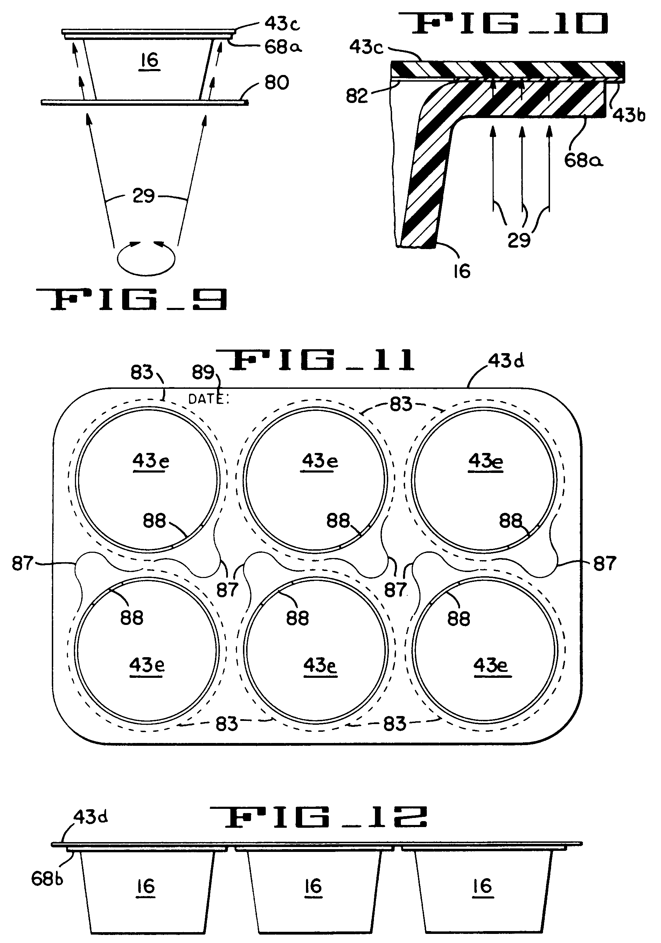

A plastic welding apparatus 10 (Fig. 1) of the present invention includes a housing 11 having a moving means or conveyor 12 which transports a plurality of containers 16 through apparatus 10. An optical sensing scanner 17 (Figs. 1, 2) or camera senses the size, shape and position of each of the containers 16 on conveyor 12 and provides this information to a computer 18. A speed sensor 22 coupled to conveyor 12 senses conveyor speed and provides speed signals to computer 18. Computer 18 uses the information from optical scanner 17 and speed sensor 22 to generate control signals for a laser controller 23 (Fig. 2) and for a scanning controller 24.

Laser controller (Fig. 2) 23 operates a shutter 25 that controls the output of a laser generator 28 which develops a laser beam 29. Laser beam 29 is reflected by a pair of mirrors 30, 31 and passes through a plurality of lenses 35, 36a, 36b and through a hole 37 in a water cooled aperture plate 38 to a laser beam scanning device 42. Scanning controller 24 provides control signals to laser beam scanning device 42 which directs laser beam 29 so a cover material or lid 43 is sealed to container 16. One laser beam scanning device 42 which can be used in the present invention is the Model LK1000 made by General Scanning Inc., Watertown, Massachusetts. One laser generator 28 which can be used is the Model RS600 made by Rofin-Sinar Co., San Jose, California.

Signals for setting up computer 18 are provided by an image input controller 44 (Fig. 2), by scanner 17, or a keyboard 48 (Fig. 1) can be used to provide the set-up signals. Scanning device 42 includes a pair of mirrors 48, 49 each controlled by one of a pair of galvanometers 54, 55. Len 36a is a Z-axis correction lens which is controlled by a galvanometer 56. Mirrors 48 and 49 provide deflection of the laser beam in the Y-axis and the X-axis respectively.

Another embodiment of a portion of plastic welding apparatus 10a is disclosed in Figure 3 where laser generator 28 projects laser beam 29 through a shutter 25 and a beam expander 60 which includes a pair of lenses 60a, 60b. A focus mechanism 63 moves lens 60b relative to lens 60a to adjust the size of beam 29. Beam 29 is reflected by a mirror 49a and passes through a spot-focusing objective lens 61 which adjusts the focus of beam 29 as beam 29 scans across container 16. A polygon mirror 62 rotated by a motor and encoder 66 provide Y-axis deflection of laser beam 29 through an angle 0. As polygon mirror 62 rotates into a position for scanning a moving container 16 (Fig. 3), shutter 25 opens so beam 29 is reflected along line 29a and scans across container 16a from a point W to a point R (from beam position 29a to position 29b). Shutter 25 then closes until a next face 62a of mirror 62 is in position to provide a sweep of another line of the laser beam across container 16a. Thus, the apparatus in Figure 3 provides a series of laser beams which sweep across moving container 16a. The scanning apparatus of Figure 3 is controlled by computer 18 (Fig. 1). A variety of shapes and sizes of containers 16 is sensed by scanner 17 and a lid is sealed to each of these containers by laser beam 29. The position of lense 60a can be adjusted by focus mechanism 63 (Fig. 3) to reduce the energy density in laser beam 29 and to produce a relatively wide seal. The lense 60a can be readjusted to provide a concentrated narrow beam 29 with a high energy density for trimming off excessive material from lid 43.

The apparatus shown in Figure 4 includes means for sweeping a laser beam across the surface of a fixed container or other device as controlled by computer 18 (Fig. 1). The side-to-side sweep from point W to point R is due to rotation of polygon mirror 62 as described in Figure 3. The back-to-front sweep from point W to point V is due to a rotation of mirror 49a about the T-axis by a control mechanism 67.

In addition to sealing lids to simple containers 16 of the type shown in Figures 3 and 6, apparatus 10 (Fig. 1) can seal a lid to a container having partitions which divide a container into a plurality of compartments. Optical scanner 17 (Figs. 1, 3) can sense an outer lip 68 (Fig. 5) and can sense one or more partitions 69 in a multi-section container 16b and provide location signals to computer 18 (Fig.

2). Computer 18 directs laser beam 29 to seal a lid 43b to container 16b along outer lip 68 and along partitions 69.

As shown in Figures 6 and 7 laser beam 29 is directed downward through a laser-transparent portion 73 of lid 43 to a laser-opaque layer 74. Layer 74 (Fig. 7) can be formed on the container lip 68, or the opaque layer could be on the lower portion of lid 43. Another solution is to use a coating of opaque dye to cover the surface of container lip 68.

A front view of a plastic welding apparatus 10 is shown in Figure 8. Apparatus 10 includes a frame 76 for supporting laser generator 28 and an attached conveyor 12. Conveyor 12 sequentially moves a plurality of containers 16 into sealing position below laser scanning device 42. Laser beam 29 from generator 28 is directed by mirrors 30, 31, through hole 37 in aperture plate 38, lenses 36a, 36b and scanning device 42 to containers 16. Scanning device 42 directs beam 29 to seal a cover material 43 (Fig. 2) to container 16, and to trim excessive material or to etch labels in material 43.

When a lid material does not permit the laser beam to penetrate to the interface between the lid and the container, laser beam 29 (Figs. 9, 10) can be directed upwardly through a transparent support 80 to container lip 68a. Laser beam 29 passes through a semi-transparent lip 68a of container 16 to a lid 43c. An opaque portion 43b of lid 43c converts energy in laser beam 29 into heat to partially melt a plastic layer 82 and lip 68a to seal lid 43c to container 16.

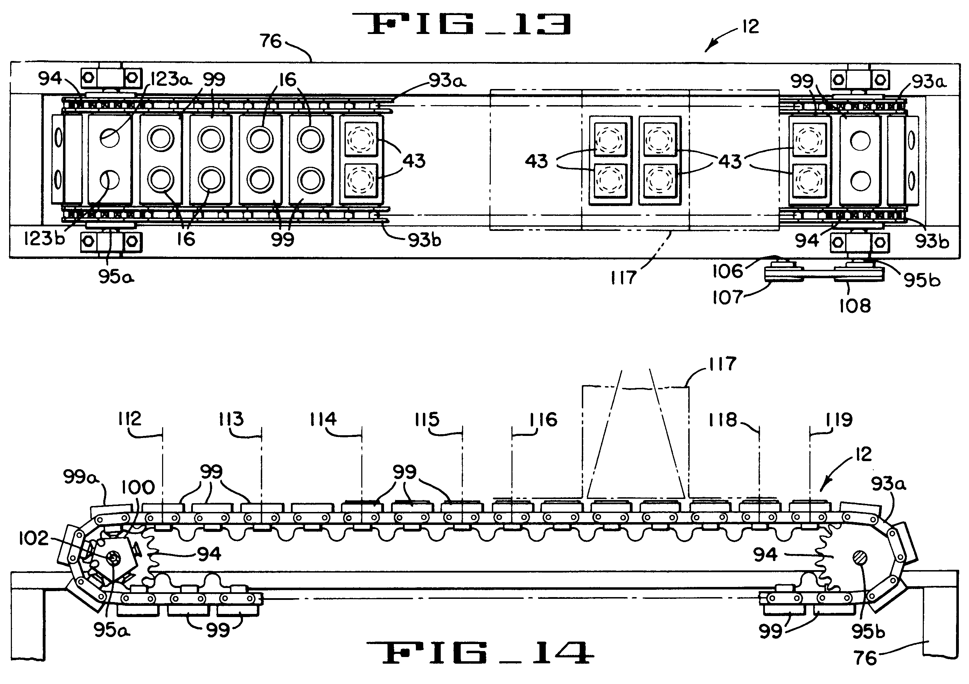

The plastic welding apparatus of the present invention can also be used to seal a cover material 43d to a plurality of containers 16 (Fig. 12) to form a "6-pack" of containers. In addition to sealing cover material 43d to a lip 68b of each container 16, computer 18 controls the direction and intensity of laser beam 29 (Fig. 2) in a manner to form a plurality of perforations 83 and a plurality of pull-off tabs 87 in material 43d. A relatively low energy density laser beam is used to seal each container lip 68b to material 43d and energy density is further reduced to provide an easy pull off seal area 88 adjacent to each tab 87. Laser beam energy density is increased to cut through material 43 and form pull off tabs 87. A consumer can lift a tab 87 and separate a corresponding lid portion 43e and the attached container 16 from the remainder of the 6-pack of containers. Tab 87 of the separated container can be lifted away from the easy peel off seal area 88, and further lifting separates lid 43e from container 16. Computer 18 (Fig. 2) directs laser beam 29 to trim the edges of material 43d to a desired shape and can be used to etch a plurality of labels 89 in material 43d.

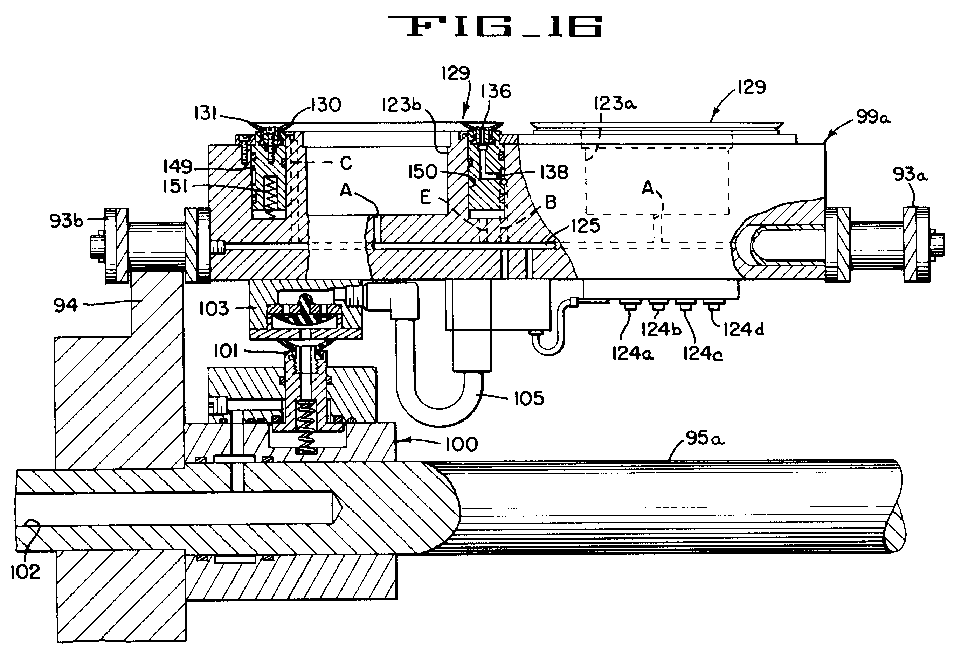

Details of conveyor 12 and means for holding lid 43 (Fig. 8) in position for welding to container 16 are shown in Figures 13 - 20. Conveyor 12 includes a pair of chains 93a, 93b trained about a plurality of sprockets 94 (Figs. 13, 14), each mounted on a shaft 95a, 95b. A plurality of container support sections 99 for holding cups and other containers are each connected between chains 93a, 93b. A 5-sided manifold 100 (Fig. 14) mounted on shaft 95a includes a plurality of valves 101 for selectively providing a vacuum to sections 99 through a tube 105 which is serially connected between sections 99. Manifold 100 can be connected to a source of vacuum (not shown) by a bore 102 in shaft 95a (Figs. 14, 16). A valve 103 (Fig. 16) on a support section 99a (Figs. 14, 16) interconnects section 99a and valve 101 on manifold 100. A motor (not shown) connected to a motor shaft 106 (Fig. 13) selectively provides power to rotate a pair of pulleys 107, 108 interconnected by a belt 111. Pulley 108 rotates shaft 95b, sprockets 94, and chains 93a, 93b which move each of the support sections 99 sequentially from a cup loading station 112 (Fig. 14), to a cup filling station 113, a lid loading station 114, an air purge station 115, a lid clamp station 116, a laser sealing station 117, a vacuum release station 118, and a cup ejection station 119.

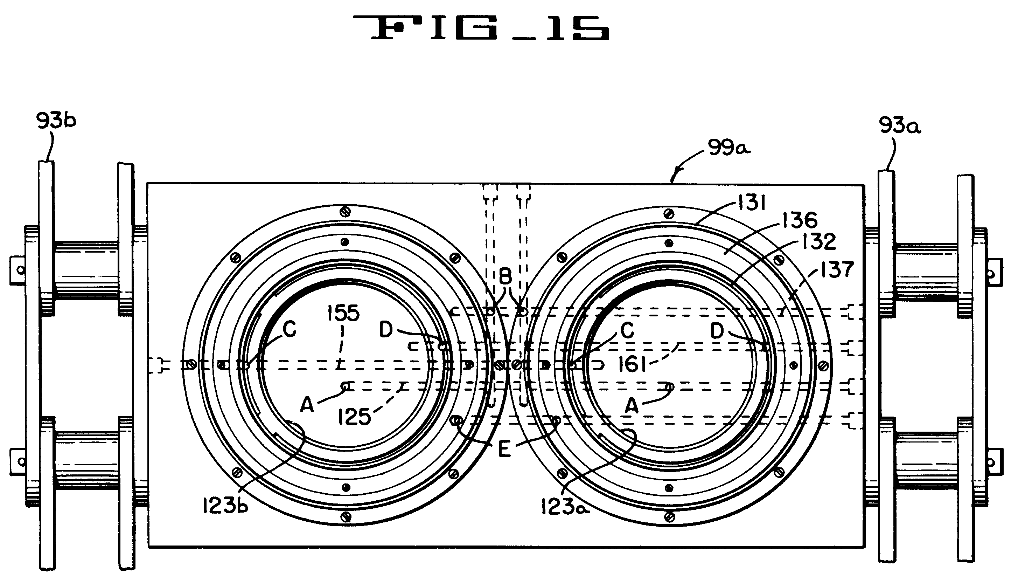

Details of container support section 99 and a sequence of a welding operation on plastic containers in section 99 are disclosed in Figures 15 - 20. Support section 99 includes a pair of recesses 123a, 123b for holding a pair of containers 16 (Fig. 13) while a cover material 43 is being sealed to each of the containers. A vacuum and a variety of pressurized gasses are coupled to support sections 99 by a plurality of switches 124a - 124d (Fig. 16) which are actuated by a plurality of actuators (not shown) mounted between chains 93a, 93b of conveyor 12.

When a pair of containers 16 (Fig. 13) are placed in recesses 123a, 123b at cup loading station 112 (Fig. 14) a vacuum is coupled through bore 102 in shaft 95a, valves 101, 103 (Fig. 16), tube 105, a bore 125 (Fig. 15) and a cup-hold vacuum inlet A to recesses 123a, 123b. The vacuum at inlet A (Figs. 15 - 20) hold containers 16 securely in position in recesses 123a, 123b so the containers can be filled with a product at filling station 113 (Fig. 14).

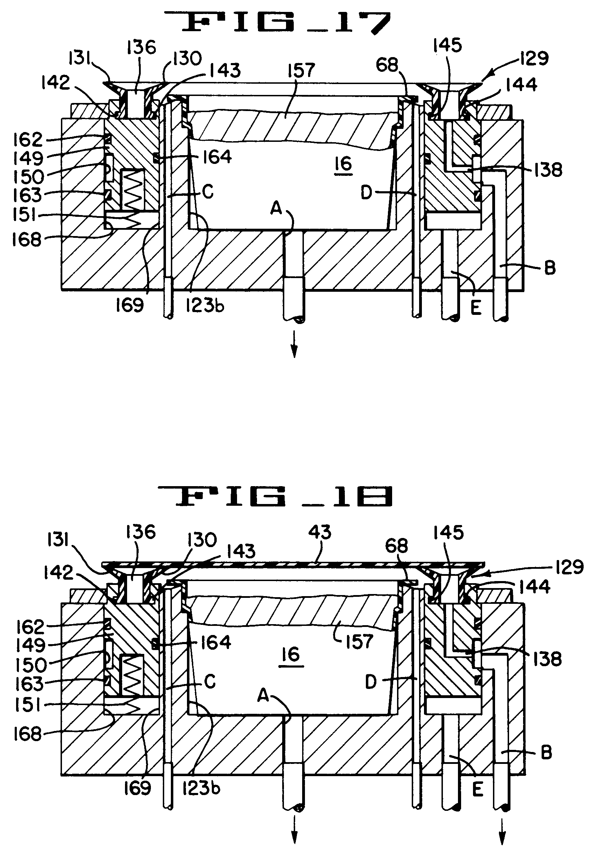

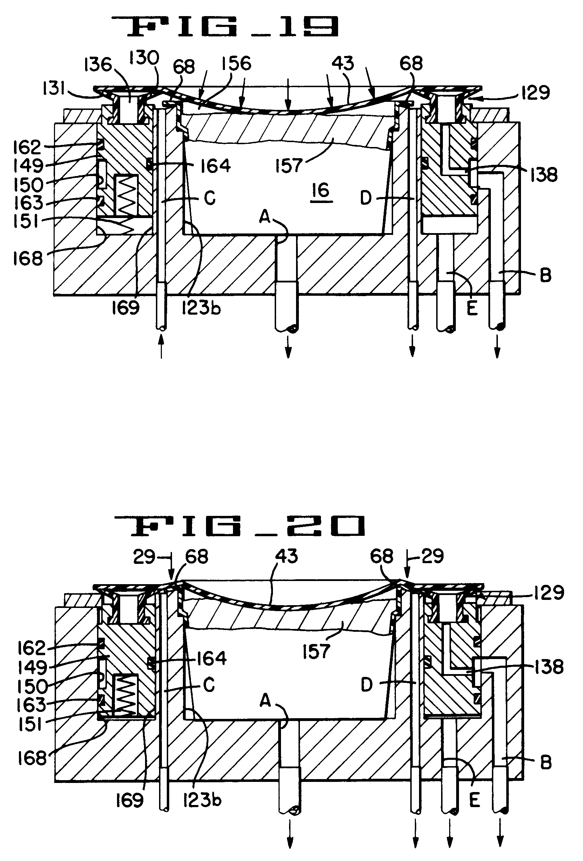

At lid loading station 114 (Fig. 14) a lid or cover material 43 is moved into a sealing position above container 16 on a lid-hold ring 129. As seen in Figures 15 - 20 each ring 129 is an elastomeric ring extending around one of the recesses 123a, 123b and having an inner lip 130, an outer lip 131 and an annular space 136 between lips 130, 131. A vacuum coupled through a switch 124a, a bore 137, an inlet B and a passage 138 to space 136 holds lid 43 securely to ring 129 (Fig. 18). The lower end of ring 129 includes a pair of radial flanges 142, 143 each mounted in a radial recess 144, 145 in an upper portion of an annular ring 149. Ring 149 is mounted in an annular chamber 150 with ring 149 being biased upward by a plurality of springs 151 (only one being shown) in each of Figures 17 - 20. The vacuum at inlet A continues to secure the containers in recesses 123a, 123b.

At air removal station 115 (Fig. 14) switch 124c is opened allowing a vacuum to be applied through switch 124c, a bore 161 (Fig. 15) and inlet D to purge air from a head space 156 between lid 43 and a product 157 (Fig. 19). A switch 124b is opened allowing an inert gas, such as nitrogen to be forced through a bore 155 (Fig. 15) and an inlet C to replace air in head space 156. A vacuum is still applied to inlets A and B to hold containers 16 and lids 43 in position.

After head space 156 is purged, the supply of inert gas to inlet C is terminated, while a vacuum is still applied to inlets A, B and D. A vacuum applied to inlet E causes annular ring 149 to move downward and to move ring 129 and lid 43 to the position shown in Figure 20. Lid 43 is pressed against outer lip 68 of container 16 and laser beam 29 is directed to the interface between lid 43 and outer lip 68 to seal lid 43 to container 16. When the seal is completed, the vacuum to inlets A, B, D and E is turned off and the sealed cup removed from recess 123a. A plurality of O-rings 162 - 164 provide a seal between ring 149 and a pair of walls 168, 169 of chamber 150 (Figs. 19, 20).

Another embodiment of a portion of plastic welding apparatus 10b is disclosed in Figure 22 where laser generator 28 projects laser beam 29 through shutter 56 and a pair of lenses 61a, 61b. A pair of galvanometers 54b, 54c control a pair of mirrors 49b, 49c to sweep laser beam 29 along an X-axis and along a Y-axis. The scanning apparatus of Figure 22 is controlled by computer 18 (Fig. 1).

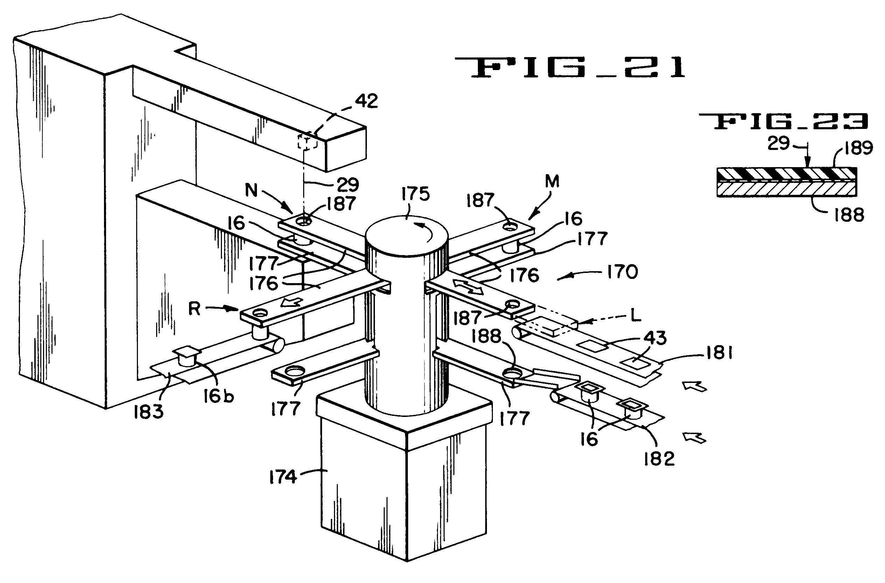

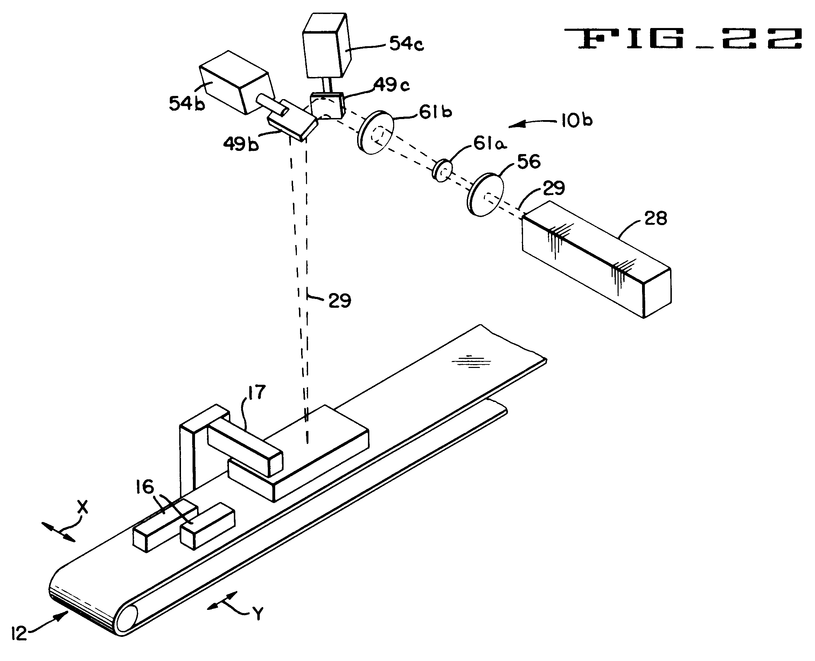

The present invention can be used to weld a thick foil material 188 (Fig. 23) to a plastic material 189 by directing laser beam 29 through plastic material 189. The laser beam can also be used to weld a thin foil material to plastic material 189.

In another embodiment of the present invention a robot 170 (Fig. 21) mounted on a support 174 is used to move a plurality of containers 16 into a sealing position beneath laser beam scanning device 42. When the sealing operation is completed robot 170 removes the sealed container and places another container in position for sealing. Robot 170 includes a revolving turret 175 having a plurality of upper arms 176 and a plurality of lower arms 177. Upper arms 176 are movable radially relative to turret 175 and lower arms 177 are movable axially relative to turret 175. A pair of feeder conveyors 181, 182 provide lids 43 and containers 16 to robot 170, and a take-away conveyor 183 removes sealed containers 16b. When containers are being loaded an upper arm 176 moves radially outward from turret 175 (Fig. 17) to a position L with a window 187 above a lid 43. Lid 43 is secured to upper arm 176 by a conventional vacuum pick up device (not shown). At the same time container feeder 182 moves a container 16 into a nest 188 in lower arm 177. Turret 175 rotates counterclockwise to a position M with lower arm 177 moving upward to secure container 16 against lid 43 held by upper arm 176. When turret 175 (Fig. 21) rotates arms 176, 177 into position N, laser beam 29 is directed through window 187 to seal lid 43 to container 16. During further counterclockwise rotation of turret 175, lower arm 177 moves downward and upper arm 176 moves radially outward as shown at position R. The vacuum which has secured lid 43 and container 16 to upper arm 176 is removed and the sealed container 16b is taken away by conveyor 183. Operation of a motor (not shown) in support 174 can be synchronized with operation of laser beam 29 by computer 18 (Fig. 2).

Thus, the present invention directs a laser beam through a semi-transparent material to a laser-opaque material where laser energy is converted to heat to partially melt the materials and weld the materials together. Containers on a conveyor can be moved past a laser energy source and an optical sensing scanner. The optical sensing scanner provides size, shape, location and orientation information to a computer. The computer uses this information to direct the laser beam which provides sealing of a wide variety of sizes, shapes and orientations of containers. The laser beam can also be used to trim the materials to a desired shape and provide markings on the surface of the materials.

Although the best mode contemplated for carrying out the present invention has been herein shown and described, it will be apparent that modification and variation may be made without departing from what is regarded to be the subject matter of the invention.

**Claims**

1.  A plastic welding apparatus for fusing plastic materials, said apparatus comprising:
    a source of laser energy for generating a laser beam;
    means for directing said laser beam to an interface between a pair of adjacent surfaces; and
    means for converting said laser beam into heat to melt and fuse said adjacent surfaces.

2. A plastic welding apparatus for fusing a first plastic material to a second plastic material, said apparatus comprising:

a source of laser energy for generating a laser beam; and

means for directing said laser beam to a zone of adjoining material to fuse a first overlapping plastic material to a second plastic material.

3. A plastic welding apparatus as defined in claim 2 wherein said laser beam deposits laser energy on a first surface of said first material and including means for converting said laser energy into heat, and said first material conducts said heat energy to an interface between said first and said second materials.

4. A plastic welding apparatus as defined in claim 2 including a laser semi-transparent first plastic material, a laser-opaque material adjacent to said zone of overlapping material and means for directing said laser beam through said semi-transparent material to said opaque material for converting energy of said laser beam into heat for providing a fuse.

5. A plastic welding apparatus as defined in claim 2 wherein said first and said second plastic materials are laser semi-transparent, and including an absorbing layer at an interface of said first and said second materials for converting energy of said laser beam into heat, and means for directing said laser beam through a selected one of said first and said second plastic materials to said absorbing layer.

6. A plastic welding apparatus as defined in claim 2 including means for sensing said zone of overlapping material and for providing signals to said directing means.

7. A plastic welding apparatus as defined in claim 2 including means for reducing energy density in said laser beam to provide a sealing area between said first and said second plastic materials, and for increasing energy density in said laser beam to provide a laser beam for cutting at least one of said first and said second plastic materials.

8. A plastic welding apparatus for sealing a cover material to a container, said apparatus comprising:

a source of laser energy for generating a laser beam; and

means for controlling the operation of said laser energy source to direct said laser beam to develop heat for sealing a cover material to a container.

9. A plastic welding apparatus as defined in claim 8 wherein a portion of said cover material overlaps a portion of said container and said laser beam develops heat to seal said overlapping cover material to said container.

10. A plastic welding apparatus as defined in claim 8 wherein said first plastic material is semi-transparent to said laser beam and said second plastic material is opaque to said laser beam, and means for directing said laser beam through said first plastic material to said second material, said opaque second plastic material converting energy of said laser beam into heat at said zone of overlapping material.

11. A plastic welding apparatus as defined in claim 8 including means for moving a container into a sealing position, means for sensing a welding zone on said container, and means for directing laser energy toward said welding zone for sealing said cover material to said container.

12. A plastic welding apparatus as defined in claim 8 including robotic means for moving a container and a cover material into position for sealing said cover material to said container, and means for directing said laser energy toward said cover material and said container.

13. A plastic welding apparatus as defined in claim 8 including means for reducing energy density in said laser beam to provide a sealing area between said cover material and said container, and for increasing energy density in said laser beam to provide a laser beam for cutting a material.

14. A plastic welding apparatus for sealing a cover material to a container, said container having a zone for overlapping material around a container opening, said apparatus comprising:

a source of laser energy for developing a laser beam;

a means for sensing a container to be sealed; and

means for directing said laser beam to a zone of overlapping material for sealing a cover material to said container.

15. A plastic welding apparatus as defined in claim 14 including means for sensing a shape of a container to be sealed, and means for using said sensed shape to direct said laser beam to seal said cover material to said container.

16. A plastic welding apparatus as defined in claim 14 including means for sensing a location of a container to be sealed, and means for using said sensed location to direct said laser beam to seal said cover material to said container.

17. A plastic welding apparatus as defined in claim 14 including means for sensing an orientation of a container to be sealed, and means for using said sensed orientation to direct said laser beam to seal said cover material to said container.

18. A plastic welding apparatus as defined in claim 14 including means for sensing a velocity of a container to be sealed, and means for using said sensed velocity to direct said laser beam to seal said cover material to said container.

19. A plastic welding apparatus as defined in claim 14 including means for reducing energy density in said laser beam to provide a sealing area between said cover material to said container, and for increasing energy density in said laser beam to provide a laser beam for cutting a material.

20. A plastic welding apparatus for sealing a cover material to a container, said container having a zone for overlapping material around a container opening, said apparatus comprising:

a source of laser energy for developing a laser beam;

a means for moving containers past said laser source;

a scanner for detecting a location of each of said containers on said moving means and for developing location signals for each of said containers moving past said scanner; and

a speed sensor coupled to said moving means for developing a speed signal representative of a speed of said moving means; and

computing means connected to said scanner and to said speed sensor for using said location signals and said speed signal to control said laser beam for sealing a cover material to each of said containers.

21. A plastic welding apparatus as defined in claim 20 including means for reducing energy density in said laser beam to provide a sealing area between said cover material and said container and for increasing energy density in said laser beam to provide a laser beam for cutting a material.

22. A plastic welding apparatus for fusing a first plastic material to a second plastic material, said apparatus comprising:

a first plastic material which is opaque to a laser beam;

a second plastic material positioned adjacent to said first material;

a source of energy for generating a laser beam; and

means for directing said laser beam to a surface of said first plastic material, said first plastic material converting said laser beam into heat and conducting said heat to an interface between said first and said second materials.

# FIG_1

# FIG_2

| | | |
|---|---|---|
| SPEED SENSOR | SCANNER | LASER CONTROLLER |
| IMAGE INPUT CONTROLLER | COMPUTER | SCANNING CONTROLLER |

LASER GENERATOR

FIG_3

EP 0 483 569 A1

FIG_4

FIG_5

FIG_6

FIG_7

FIG_8

FIG_9

FIG_10

FIG_11

FIG_12

FIG_13

FIG_14

FIG_15

FIG_16

# FIG _17

# FIG _18

16

# FIG_19

# FIG_20

FIG_21

FIG_23

EP 0 483 569 A1

FIG_22

## DOCUMENTS CONSIDERED TO BE RELEVANT

EP 91117370.6

| Category | Citation of document with indication, where appropriate, of relevant passages | Relevant to claim | CLASSIFICATION OF THE APPLICATION (Int. Cl.5) |
|---|---|---|---|
| X | US - A - 3 560 291 (FOGLIA) * Claim 1; fig. 1a * | 1,2 | B 29 C 65/16 |
| A | | 3-5,8, 14,20, 22 | |
| X | US - A - 4 224 096 (OSBORNE) * Claims 1,2; fig. 2 * | 1,2 | |
| A | | 3-5,8, 14,20 | |
| A | DE - A - 2 841 062 (WINDMÖLLER & HÖLSCHER) * Totality * | | |

TECHNICAL FIELDS
SEARCHED (Int. Cl.5)

B 29 C

The present search report has been drawn up for all claims

| Place of search | Date of completion of the search | Examiner |
|---|---|---|
| VIENNA | 28-11-1991 | REININGER |

EPO FORM 1503 03.82 (P0401)